# EUROPEAN PATENT APPLICATION

(11) **EP 4 383 393 A2**
(43) Date of publication of application: **12.06.2024**
(21) Application number: 23214838.7
(22) Date of filing: 07.12.2023
(51) Int. Cl.: H01M 10/0562

(54) **ORGANIC-INORGANIC COMPOSITE ELECTROLYTE AND PREPARATION METHOD THEREOF AND BATTERY**

(30) Priority: 09.12.2022 CN 202211578579
(71) Applicant: Hon Hai Precision Industry Co., Ltd., New Taipei City (TW); SolidEdge Solution Inc., Hsinchu 300 (TW)
(72) Inventor: CHEN, MAO-SUNG, 300 Hsinchu (TW); LAI, HONG-ZHENG, 300 Hsinchu (TW); CHANG, TSENG-LUNG, 300 Hsinchu (TW)
(74) Representative: Zaboliene, Reda

(57) **Abstract**

An organic-inorganic composite electrolyte comprises a plurality of metal cations, a plurality of organic polymer groups, a plurality of negatively charged ion groups and a plurality of salt anions. At least part of the plurality of metal cations is combined with the plurality of organic polymer groups, the plurality of negatively charged ion groups and the plurality of salt anions via covalent bonds.

## Description

### CROSS-REFERENCE TO RELATED APPLICATIONS

This application claims all benefits from the Chinese Patent Application No. 202211578579.0, filed on December 9, 2022, in the China National Intellectual Property Administration, the disclosure of which is incorporated herein by reference.

### FIELD

The disclosure relates to an organic-inorganic composite electrolyte, a preparation method of the organic-inorganic composite electrolyte, and a battery using the organic-inorganic composite electrolyte.

### BACKGROUND

With the rising prevalence of electric vehicles, the demand endurance has escalated significantly. Consequently, enhancing the energy density of secondary batteries, such as lithium and sodium-ion batteries, has remained a prominent focus in research. However, among the existing cations, including lithium, sodium, magnesium, aluminum and other secondary ion batteries, while performance improvements are evident, safety concerns persist.. The primary issue arises during the initial charge/discharge phase (activation process) of the battery when the electrolyte undergoes consumption, forming a solid electrolyte interphase (SEI layer) on the cathode and anode electrode surface. While the SEI layer serves to safeguard the electrodes, continuous cycling thickens this layer, leading to a progressive increase in internal battery resistance. This can potentially trigger side reactions with the electrolyte and, in severe cases, promote dendrite deposition, posing safety hazards.

An ideal electrolyte, whether solid, gel, or colloidal, must fulfill several criteria. It should exhibit high stability under both electrochemical and chemical conditions, minimize side reactions, demonstrate high ionic conductivity coupled with excellent electronic insulation, and effectively inhibit electrolysis during cycling. This is crucial in preventing the formation of lithium dendrites and countering the decay that occurs throughout the process.

Due to the predominantly hydrocarbon or alkyl groups present in traditional carbonate electrolytes, the cationic elements of positive electrodes (Fe, Ni, Co, Mn) are prone to dissolution during circulation, posing safety risks. Simultaneously, high-voltage cathode materials face challenges in stable cycling due to the electrochemical window limitations of the electrolyte. They are susceptible to side reactions at elevated potentials and high current densities, often resulting in drawbacks such as poor battery cycle and rate performance. Addressing these challenges, Tesla researcher Jeff Dahn developed compounds like vinylene carbonate (VC), ethylene sulfate (DTD), 3-methyl-1,4,2-diethazole-5-ketone (MDO), lithium difluorophosphate (LFO), and other additives. However, these additives are also prone to electron loss and oxidative decomposition in acidic conditions, leading to diminished cycling efficiency.

Ionic liquid (IL) electrolytes, such as imidazoles, possess low viscosity and high ionic conductivity. However, they exhibit a drawback-a narrow electrochemical window and an inability to form a stable Stoke radius (Stoke Radius) with cations (Li⁺, Na⁺, K⁺, Mg²⁺, Al³⁺). Quaternary ammonium salts offer the flexibility to adjust hydrophilicity or hydrophobicity. Nevertheless, their high viscosity hampers ion diffusion rates, while their low ionic conductivity impacts performance rates. Pyridines feature a broad electrochemical window and high ionic conductivity, yet suffer from high viscosity. Apart from their high cost, the application of ionic liquids presents challenges such as the complexities in doping, mixing various ionic liquids, and intricate process conditions, which often lead to counter-effects and prevent direct blending.

### BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as limiting the scope. For one of ordinary skill in the art, other related drawings can also be obtained from these drawings without any creative work.
FIG. 1 is a schematic diagram of a ligand format of the organic-inorganic composite electrolyte provided by the embodiment of the present disclosure.
FIG. 2 is a schematic structural diagram of a negative electrode-less battery provided by an embodiment of the present disclosure.
FIG. 3 is a schematic structural diagram of the negative electrode in the battery without negative electrode provided by the embodiment of the present disclosure.
FIG. 4 is a charge and discharge curve of a battery without anode provided by an embodiment of the present disclosure.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

Embodiments of the present disclosure provide an organic-inorganic composite electrolyte. The organic-inorganic composite electrolyte is formed by reacting at least one ether, at least one nitrile and at least one sulfone with salts and a negatively charged ion agent. The ether is at least one selected from the group consisting of ethylene glycol dimethyl ether, diethylene glycol dimethyl ether, triethylene glycol dimethyl ether and tetraethylene glycol dimethyl ether. The nitrile is at least one selected from the group consisting of acetonitrile, succinonitrile, adiponitrile and glutaronitrile. The sulfone is at least one of sulfolane, sulfone fluoride, succinate, and ethyl methyl sulfone. The salts contain at least one anion of ClO₄⁻, AsF₆⁻, PF₆⁻, TFSI (N(CF₃SO₂)₂⁻), FSI(N(FSO₂)₂⁻), BOB(B(C₂O₄)₂⁻), and DFOB(B(C₂O₄)₂⁻), and contain at least one of the cation of Li⁺, Na⁺, K⁺, Mg²⁺, and Al³⁺. The negatively charged ion agent is at least one selected from HNO₃, KNO₃, AgNO₃, C₂N₄O₆, lithium difluorodioxalate, phosphoric acid, Ag₃PO₄, Li₃PO₄, Li₂SO₄, Li₂SO₃, and lithium metabisulfite. The reactants used to form the organic-inorganic composite electrolyte are not limited thereto, as long as they include at least one ether, at least one nitrile, and at least one sulfone, salts, and a negatively charged ion agent.

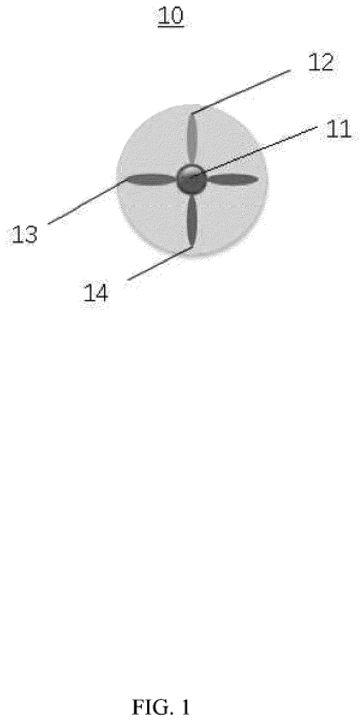

Referring to FIG. 1, which is a schematic format diagram of the ligand (interface model) of the organic-inorganic composite electrolyte 10. The organic-inorganic composite electrolyte 10 includes a plurality of metal cations 11, a plurality of organic polymer chains or groups 12, a plurality of negatively charged ion groups 13 and a plurality of salt anions 14. Among them, at least part of the metal cations 11 are simultaneously combined with the negatively charged ion groups 13, the organic polymer chains 12 and the salt anions 14 through covalent bonds. The salt anions 14 are ClO₄⁻, AsF₆⁻, PF₆⁻, TFSI (N(CF₃SO₂)₂⁻), FSI(N(FSO₂)₂⁻), BOB(B(C₂O₄)₂⁻), DFOB(B(C₂O₄)₂⁻). The metal cation 11 is at least one of Li⁺, Na⁺, K⁺, Mg²⁺, and Al³⁺. The negatively charged ion group 13 is at least one of HNO₃, KNO₃, AgNO₃, C₂N₄O₆, lithium difluorodioxalate, phosphoric acid, Ag₃PO₄, Li₃PO₄, Li₂SO₄, Li₂SO₃, and lithium metabisulfite.

It's understood that some metal cations aren't strictly bound simultaneously to the negatively charged ion group, the organic polymer chain or group, and the salt anion. Instead, these metal cations may selectively combine with either the negatively charged ion group and the organic polymer chain or group, or with the organic polymer chain or group and the salt anion.

Salt anions facilitate ionic conductivity, while negatively charged coordination ion agents act as surface stabilizers. Organic molecular compounds are structured to support the Stokes radius, enabling the diffusion of cations (Li⁺, Na⁺, K⁺, Mg²⁺, Al³⁺) in the environment, thereby facilitating electron movement to complete charge and discharge cycles. Additionally, the introduced organic molecular compounds can adsorb as a film at the cathode interface, restraining the dissolution of metal ions like Fe, Ni, Co, Mn, etc., and preventing metal dendrite formation on the separator at the negative electrode. In the context of lithium batteries, in an organic-inorganic composite electrolyte, negatively charged coordination ion groups and salt anions contribute to forming an inorganic SEI. This SEI aids in suppressing electrolyte side reactions, reducing lithium deposition overpotential, and inhibiting dendrite formation on the surface. Furthermore, the surface stabilizer's role involves capturing H⁺ to impede the production of H₂, CH₄, and C₂H₄..

Metal cations form covalent bonds with salt anions and negatively charged ion groups, while organic polymers aid the diffusion of metal cations by offering Stokes radii support for these cations. Consequently, the depiction mentioned above represents a dynamic, spherical transformation. The covalent bond strength between the core metal cation and the negatively charged ions is marginally weaker than that between the metal cation and the salt anion. This characteristic allows it to capture H⁺ during the charge and discharge cycles, restraining adverse battery reactions, and stabilizing the charging and discharging cycles.

The organic-inorganic composite electrolyte in this embodiment serves as a high-voltage, high-safety composite electrolyte. Beyond its application in conventional wound and soft-packed lithium-ion secondary batteries, it extends its suitability to batteries that do not incorporate anode electrodes.

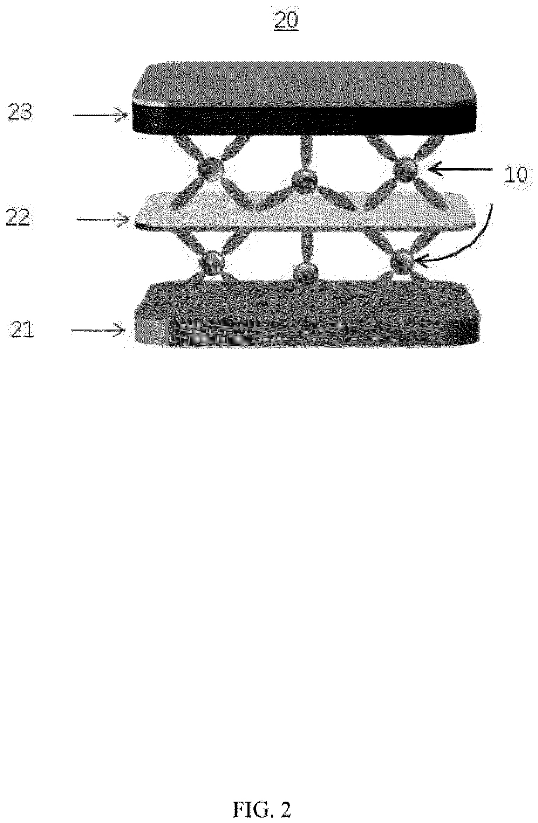

Referring to FIG. 2, an embodiment of the present disclosure provides a battery 20 without anode. The battery 20 comprises a positive electrode 21, a negative electrode 22, a separator 23 disposed between the positive electrode 21 and the negative electrode 22, and an organic-inorganic composite electrolyte 10. The positive electrode 21 is NCM811, the negative electrode 22 is copper foil, and the electrolyte is the organic-inorganic composite electrolyte of the above embodiment. In the organic-inorganic composite electrolyte, some of the lithium ions are concurrently bonded to the negatively charged ion group, the organic polymer chain or group, and the salt anion through covalent bonds. Meanwhile, another fraction of the lithium ions selectively forms bonds with only one or two of the negatively charged coordination ion groups, the organic polymer chains, or the salt anions at any given time.

It can be understood that the battery is not limited to a battery without anode, and can also be other batteries.

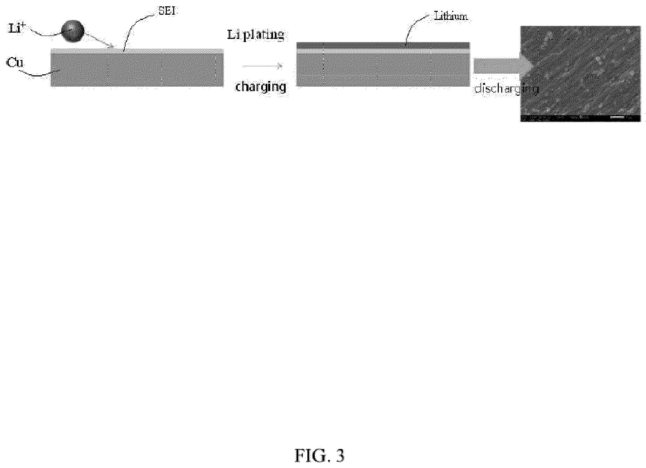

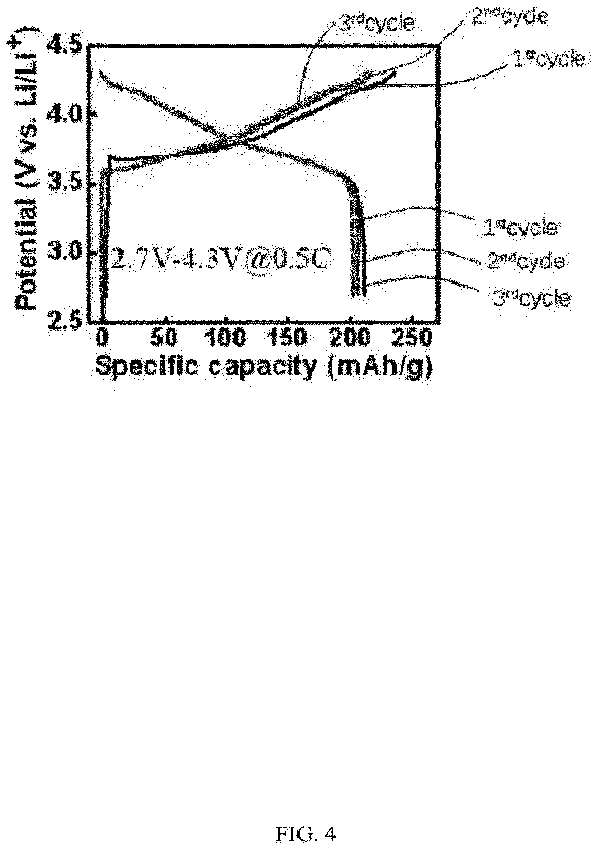

Referring to FIG. 3. on the negative electrode copper foil, the negatively charged ion groups and salt anions in the organic-inorganic composite electrolyte form an inorganic SEI layer, which is thin, dense, and flat. Consequently, there is no formation of dendrites on the copper foil. Post 200 cycles, there is an absence of lithium metal agglomeration on the surface, indicating the absence of lithium dendrite agglomerations. Simultaneously, it does not induce corrosion at the current collector end and avoids substantial gas production. Please see FIG. 4 for the electrical test results of the anode-less battery, the anode-less battery has high volumetric energy density, simple manufacturing process and low battery recycling cost.

The embodiment of the present disclosure provides a method for preparing an organic-inorganic composite electrolyte. The preparation method includes the following steps:
S1: mixing at least one ether, at least one nitrile and at least one sulfone to form an organic molecular compound;
S2: mixing at least one salt anion and at least one cation into the organic molecular compound; and
S3: adding at least one negatively charged coordination ion agent for coordination to synthesize an organic-inorganic composite electrolyte.

In step S1, a combination of compounds such as ethylene glycol dimethyl ether, diethylene glycol dimethyl ether, triethylene glycol dimethyl ether, tetraethylene glycol dimethyl ether, etc.; dinitrile, adiponitrile, glutaronitrile, etc.; sulfolane, sulfone fluoride, succinate, ethyl methyl sulfone, etc.; are mixed to create an organic molecular compound. This organic molecular compound comprises lowest unoccupied molecular orbital (LUMO) organic molecular groups. It's crucial to consider the LUMO organic molecular groups in the conduction band for this organic molecular compound. If the energy level difference between Li⁺ and the organic molecule is minimal, the high energy level of LUMO organic molecular groups may result in easy electron loss, thereby affecting stability. The organic groups present in at least one ether, at least one nitrile, or at least one sulfone constitute the LUMO organic molecular groups. Therefore, the organic groups within the organic molecular compound represent LUMO organic molecular groups..

In step S1, to prevent reactions during the process, the utilization of molecular sieves is essential to eliminate water, while a moisture analyzer is employed to monitor and maintain the moisture content below 10 ppm. When combining multiple organic molecular compounds, careful consideration is necessary regarding the quantity added during blending to prevent excessive heat generation.

In step S1, one embodiment involves mixing diethylene glycol dimethyl ether, succinonitrile, and sulfolane in a volume ratio of 1:1:1 to create an organic molecular compound.

In step S2, the salt anions contains at least one of ClO₄⁻, AsF₆⁻, PF₆⁻, TFSI (N(CF₃SO₂)₂⁻), FSI(N(FSO₂)₂⁻), BOB(B(C₂O₄)₂⁻), and DFOB(B(C₂O₄)₂⁻). The salt cations contains at least one of cations Li⁺, Na⁺, K⁺, Mg²⁺, and Al³⁺. The concentration of salt cations ranges between of 1~10 mol/L. To prevent the generation of free acid and maintain ligand stability, the salt is kept at a temperature range of 0~8°C. Molecular sieves are utilized to remove water (0.1 ppm).

In one embodiment, PF₆⁻, TFSI (N(CF₃SO₂)₂⁻) and Li⁺ are mixed into organic molecular compounds. Among them, the concentration of Li⁺ is ranged from 1.1 to 1.2 mol/L, and the temperature is controlled at about 2 °C.

In step S3, the negatively charged coordination ion agent employed for coordination includes at least one of HNO₃, KNO₃, AgNO₃, C₂N₄O₆, lithium difluorodioxalate, phosphoric acid, Ag₃PO₄, Li₃PO₄, Li₂SO₄, Li₂SO₃, and lithium metabisulfite. The weight ratio of low LUMO organic molecular groups in the organic molecular compound to the negatively charged coordination ion agent used for coordination ranges between 0.001 to 0.100. To prevent excessive free acid generation from heat release, the temperature must be maintained within a range of 0 to 8°C.

In one embodiment, the negatively charged coordination ion agent added for coordination is AgNO₃. Among them, a weight ratio of organic molecular groups to AgNO₃ is 0.05: 1, and the temperature is controlled at about 1°C.

Simultaneously, the functional groups within the organic compounds must have the capability to establish a composite electrolyte with the negatively charged ion agent. The negatively charged coordination ion group, in conjunction with the salt anion, constitutes an inorganic SEI. This SEI serves to hinder the decomposition of electrolyte side reactions, minimize lithium deposition overpotential, and suppress dendrite formation on the surface. Moreover, the capture of H⁺ via negatively charged ions functions to impede the generation of CO₂, H₂, CH₄, and C₂H₄.

The preparation method outlined for the organic-inorganic composite electrolyte in this embodiment directly involves blending the ligands using molecular sieves while regulating the ligand temperature within the range of 0 to 8 °C. This method effectively prevents degradation of salt anions and the formation of free acid through negative reactions (H⁺). The preparation technique for the organic-inorganic composite electrolyte in this embodiment offers a straightforward process, ensuring ease of control and suitability for industrial-scale production. Moreover, only the use of molecular sieves is required for blending, allowing the resulting electrolyte post-blending to exist in liquid, colloidal, or condensed states.

Embodiments of the present disclosure introduce a method for preparing a battery utilizing an organic-inorganic composite electrolyte. The preparation method encompasses the following steps: dissolving cathode material, conductive agent, and binder in a solvent, comprising a mass percentage of 88:1:11, to yield a mixture, controlling the solid content at 50%. Subsequently, applying the resulting mixture onto an aluminum foil current collector, followed by vacuum drying, yields a cathode electrode sheet.

Considering the positive electrode area designed, plan the negative electrode to be 1.1 to 1.05 times the size of the copper foil current collector.

Subsequently, traditional production procedures are employed to assemble the NCM811 cathode plates, organic-inorganic composite electrolytes, and composite separators for stacking in soft-pack battery construction, culminating in the assembly of 5Ah batteries.

Batteries utilizing organic-inorganic composite electrolytes in the embodiments of the present disclosure demonstrate high volumetric energy density, feature uncomplicated manufacturing processes, and incur low battery recycling costs.

The illustrated embodiments provided above are merely examples. Despite outlining numerous features and benefits of the current technology in the preceding description, including details regarding the structure and functionality of the present disclosure, it is important to note that the disclosure is illustrative. Alterations, including adjustments in shape, size, and arrangement of components, falling within the scope of the principles of the present disclosure, may be made in the details, as permitted by the broad general interpretation of the terms used in the claims.

Depending on the specific embodiment, some steps described in the methods may be omitted, while others could be included, and the sequence of steps might be modified. Although the description and claims associated with a method may include indications concerning specific steps, these indications are solely for identification purposes and not intended as a prescribed order for the steps..

## Claims

1. An organic-inorganic composite electrolyte, comprising:
a plurality of metal cations, a plurality of organic polymer groups, a plurality of negatively charged ion groups and a plurality of salt anions, wherein at least part of the plurality of metal cations is combined with the plurality of organic polymer groups, the plurality of negatively charged ion groups and the plurality of salt anions via covalent bonds.

2. The organic-inorganic composite electrolyte of claim 1, wherein the plurality of salt anions is selected from the group consisting of ClO₄⁻, AsF₆⁻, PF₆⁻, TFSI (N(CF₃SO₂)₂⁻), FSI (N(FSO₂) ₂⁻), BOB(B(C₂O₄)₂⁻), and DFOB(B(C₂O₄)₂⁻).

3. The organic-inorganic composite electrolyte of claim 1, wherein the plurality of metal cations is selected from the group consisting of Li⁺, Na⁺, K⁺, Mg²⁺, and Al³⁺.

4. The organic-inorganic composite electrolyte of claim 1, wherein the plurality of negatively charged ion groups is a negatively charged ion agent.

5. The organic-inorganic composite electrolyte of claim 4, wherein the negatively charged ion agent is selected from the group consisting of HNO₃, KNO₃, AgNO₃, C₂N₄O₆, lithium difluorodioxalate, phosphoric acid, Ag₃PO₄, Li₃PO₄, Li₂SO₄, Li₂SO₃, and lithium metabisulfite.

6. A battery comprising:
a cathode electrode, an anode electrode, and an organic-inorganic composite electrolyte according to any one of claims 1-5.

7. A method for preparing an organic-inorganic composite electrolyte, comprising:
S1: mixing at least one ether, at least one nitrile and at least one sulfone to form an organic molecular compound;
S2: mixing at least one salt anion and at least one cation into the organic molecular compound; and
S3: adding at least one negatively charged coordination ion agent for coordination to synthesize an organic-inorganic composite electrolyte.

8. The method of claim 7, wherein in step S1, a molecular is added to remove water, and moisture content is less than 10 ppm.

9. The method of claim 7, wherein in step S1, the organic molecular compound comprises low LUMO organic molecular groups.

10. The method of claim 9, wherein in step S3, a weight ratio of the LUMO organic molecular groups in the molecular compound to the negatively charged coordination is in a range of 0.001~0.100.

11. The method of claim 7, wherein in step S2, a concentration of the at least one cation in the organic molecular compound is in a range of 1-10 mol/L.

12. The method of claim 7, wherein in step S3, a temperature is in a range of 0~ 8 °C.

13. The method of claim 7, wherein in step S1, the at least one ether is selected from the group consisting of ethylene glycol dimethyl ether, diethylene glycol dimethyl ether, and triethylene glycol dimethyl ether.

14. The method of claim 7, wherein in step S1, the at least one nitrile is selected from the group consisting of acetonitrile, succinonitrile, adiponitrile, and glutaronitrile.

15. The method of claim 7, wherein in step S1, the at least one sulfone is selected from the group consisting of sulfolane, sulfone fluoride, disulfone, and ethyl methyl sulfone.
